(19) **Europäisches Patentamt / European Patent Office / Office européen des brevets**

(11) **EP 4 141 066 B1**

(12) **EUROPEAN PATENT SPECIFICATION**

(45) Date of publication and mention
of the grant of the patent:
**14.02.2024   Bulletin 2024/07**

(21) Application number: **21193786.7**

(22) Date of filing: **30.08.2021**

(51) International Patent Classification (IPC):
**C08L 23/06** *(2006.01)*        **C08L 23/08** *(2006.01)*

(52) Cooperative Patent Classification (CPC):
(C-Sets available)
**C08L 23/06; C08L 23/0815;** C08L 2203/18;
C08L 2205/025; C08L 2205/035; C08L 2207/20;
Y02W 30/62                                    (Cont.)

(54) **POLYOLEFIN COMPOSITION COMPRISING POLYETHYLENE AND RECYCLED PLASTIC MATERIAL**

POLYOLEFINZUSAMMENSETZUNG MIT POLYETHYLEN UND RECYCELTEM KUNSTSTOFFMATERIAL

COMPOSITION DE POLYOLÉFINE COMPRENANT DU POLYÉTHYLÈNE ET MATÉRIAU PLASTIQUE RECYCLÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.03.2023   Bulletin 2023/09**

(73) Proprietor: **Borealis AG
1020 Vienna (AT)**

(72) Inventors:
• **LIU, Yi
  4021 Linz (AT)**
• **FREUDENTHALER, Paul Johann
  4021 Linz (AT)**
• **FISCHER, Jörg
  4021 Linz (AT)**
• **LANG, Reinhold W.
  4021 Linz (AT)**

(74) Representative: **Maikowski & Ninnemann
Patentanwälte Partnerschaft mbB
Postfach 15 09 20
10671 Berlin (DE)**

(56) References cited:
**EP-A1- 2 740 761          WO-A1-2008/131817
WO-A1-2016/005265      US-A1- 2003 113 496**

(52) Cooperative Patent Classification (CPC): (Cont.)

C-Sets
**C08L 23/06, C08L 23/0815, C08L 23/04,
C08L 23/10;
C08L 23/0815, C08L 23/06, C08L 23/04,
C08L 23/10**

C-Sets
**C08L 23/06, C08L 23/0815, C08L 23/04,**

**Description**

The invention relates to a polyolefin composition comprising at least one bimodal polyethylene and recycled plastic material, to an article comprising the polyolefin composition and a process for preparing such a polyolefin composition.

Polyolefins, in particular polyethylene and polypropylene are increasingly consumed in large amounts in a wide range of applications, including packaging for food and other goods, fibres, automotive components, and a great variety of manufactured articles. Taking into account the huge amount of waste collected compared to the amount of waste recycled back into the stream, there is still a great potential for intelligent reuse of plastic waste streams and for mechanical recycling of plastic wastes.

With their inherent versatility, plastics play crucial roles in a sustainable and resource-efficient economy. However, as more and more plastic has been created and used in a mode of linear economy, plastic waste is nowadays considered a serious social problem. For that, it is important to form a circular economy that brings plastic waste back to a second life, i.e., to recycle it. This not only avoids leaving plastic waste in the environment but also recovers its value.

The European Commission confirmed in 2017 that it would focus on plastics production and use. The EU goals are that 1) by 2025 at least 55 % of all plastics packaging in the EU should be recycled and 2) by 2030 all plastic packaging placed in the EU market is reusable or easily recycled. This pushes the brand owners and plastic converters to pursue solutions with recyclates or virgin/recyclate blends. More recently, this year, EU agreed tax on plastic packaging waste. The tax, introduced as of 1 January 2021, is calculated on the weight of non-recycled plastic packaging waste "with a call rate of €0.80/kilogramme with a mechanism to avoid excessively regressive impact on national contributions."

It is therefore urgently needed to find ways of recycling plastic waste. However, recycled plastics are normally inferior to virgin plastics in their quality due to degradation, contamination and mixing of different plastics.

One major trend in the field of polyolefins is the use of recycled materials, which are derived from a wide variety of sources. Durable goods streams such as those derived from yellow bags, yellow bins, community collections, waste electrical equipment (WEE) or end-of-life vehicles (ELV) contain a wide variety of plastics. These materials can be processed to recover acrylonitrile-butadiene-styrene (ABS), high impact polystyrene (HIPS), polypropylene (PP) and polyethylene (PE) plastics. Separation can be carried out using density separation in water and then further separation based on fluorescence, near infrared absorption or raman fluorescence.

Among the plastic waste, polyethylene is one of the most abundant as it is widely used in packaging (mostly LDPE), building and piping industry (mostly HDPE). Recycled polyethylene is mainly made of goods such as bottles and packaging, which are sorted, chopped, washed and homogenized to provide a material for different applications. Although recycled polyethylene is already used for low-pressure pipes for gardens and agriculture, other applications such as high pressure pipes are more restricted due to the higher requirements.

Different approaches for useful applications of recycled polyethylene have been described.

For example, CN109796650 refers to a method for preparing a recycled plastic pipe by means of waste PE material. The plastic pipe material formula comprises recycled high-density PE resin, recycled low-density PE resin, color master batch and conventional plastic defoaming agent; the components are calculated by 100 kg, 68.8 kg of recycled low-density PE resin, 29.2 kg of recycled high-density PE resin, 1.5 kg of color master batch and 0.5 kg of conventional plastic defoamer.

WO 2017/220657 A1 discloses a pipe produced from modified polyethylene. The polyethylene base resin comprises a modified polyethylene obtained by a reactive modification of a recycled polyethylene in the presence of a free radical generator, wherein (a) the free radical generator is present in an amount of from 200 ppm to 4000 ppm, (b) the modified polyethylene has a melt flow rate (5 kg, 190 °C) of $MFR_f$, the recycled polyethylene has a melt flow rate (5 kg, 190°C) of $MFR_0$, the free radical generator has a concentration of X based on the amount of recycled polyethylene, and $MFR_f$, $MFR_0$, and X follow an exponential decay defined by equation (I):

$$MFR_f = MFR_0 \times e^{-\mu X} \qquad (I)$$

wherein $\mu$ in equation (I) is an exponential decay constant and $\mu$ is greater than zero.

Juan et al. (Journal of Cleaner Production 2020, 276, 124081) investigates the incorporation of recycled high-density polyethylene to polyethylene pipe grade resins to increase close-loop recycling.

As one can see, the use of recycled polyethylene for replacing virgin polyethylene is in general possible. However, there is still a need for improving or maintaining thermomechanical properties such as fatigue crack growth performance when replacing virgin polymer by recycled material.

Thus, it was an object of the invention to provide a polyolefin composition wherein at least a part of virgin polyolefin is replaced by polyolefin material recovered from waste plastic material while thermomechanical properties of such a polyolefin composition are at least maintained or even improved.

This object has been solved by providing a polyolefin composition comprising:

a) 20-80 wt% (based on the total weight of the polyolefin composition) of at least one bimodal polyethylene comprising a polyethylene homopolymer and a polyethylene copolymer formed from ethylene and at least one olefin with at least 6 carbons atoms as comonomer with a melt flow rate $MFR_5$ (190°C, 5 kg, measured according to ISO 1133) of at least 0.1 g/10 min

b) 80-20 wt% (based on the total weight of the polyolefin composition) of a polyethylene enriched blend of recycled plastic material comprising polyethylene (PE) and polypropylene (PP) with a melt enthalpy ratio of PP : PE in the range of 0:100 to 10:90 (measured according to ISO 11357-1 and ISO 11357-3)which is recovered from a waste plastic material derived from post-consumer and/or post-industrial waste, with a melt flow rate $MFR_5$ (190°C, 5 kg, measured according to ISO 1133) of at least 0.8 g/10 min; and

optionally further additives, wherein the sum of all ingredients always adds up to 100 wt%.

Thus, a polyolefin composition is provided that contains recycled plastic material and virgin bimodal polyethylene polymer. This combination provides a composition wherein at least a part of virgin polymer is replaced by recycled material, wherein properties such as fatigue crack growth rate are almost comparable to the virgin polymers. Such compositions are applicable for pipes, such as high pressure pipes.

As described, the polyolefin composition according to the invention comprises a virgin bimodal polyethylene polymer containing a comonomer based on an olefin with at least 6 carbon atom (>=C6). It was surprisingly found that copolymers containing olefins with a longer chain length as comonomers, such as 1-hexene improves the resistance to fatigue crack growth of recyclates more than such copolymers based on comonomers with shorter chain length of less than C6, such as C4 olefins, in particular at low concentration of recyclate. As will be shown further below, there is a non-linear change of C6 based polymer at low recyclate content of 25%, in comparison to C4 based polymer.

It is to be understood that the present polyolefin composition does not contain talc (except any amounts present in the recyclate), rubber and is essentially free of peroxides, preferably the peroxide content based on the total weight of the polyolefin composition is below 0.5 wt%.

For the purposes of the present description and of the subsequent claims, the term "recycled" is used to indicate that the material is recovered from post-consumer waste and/or industrial waste. Namely, post-consumer waste refers to objects having completed at least a first use cycle (or life cycle), i.e. having already served their first purpose and been through the hands of a consumer; while industrial waste refers to the manufacturing scrap which does normally not reach a consumer.

As described also further below, typical other components originating from the first use are thermoplastic polymers, like polystyrene and polyamide, talc, chalk, carbon black, pigments such as $TiO_2$, ink, wood, paper, cellulose, limonene and fatty acids. The content of polystyrene (PS) and polyamide (PA) in recycled polymers can be assessed by Fourier Transform Infrared Spectroscopy (FTIR) and the content of talc, chalk and carbon black, may be measured by Thermogravimetric Analysis (TGA).

The term "virgin" denotes the newly produced materials and/or objects prior to first use and not being recycled. In case that the origin of the polymer is not explicitly mentioned the polymer is a "virgin" polymer.

According to an embodiment the present polyolefin composition comprises

a) 23 -77 wt%, preferably 48 - 77 wt%, more preferably 63 - 77 wt% of the at least one bimodal polyethylene; and
b) 77 - 23 wt%, preferably 52 - 33 wt%, more preferably 37 - 23 wt% of the polyethylene enriched blend of recycled plastic material comprising polypropylene and polyethylene;

and optionally further additives, wherein the sum of all ingredients always adds up to 100 wt%.

It is to be understood that the amounts of bimodal polyethylene and polyethylene recyclate are always complementary to each other. For example, the composition may comprise in one embodiment 25 wt% bimodal polyethylene and 75 wt% polyethylene recyclate or vice versa, or 30 wt% bimodal polyethylene and 70 wt% polyethylene recylate or vice versa.

In preferred embodiments the present polyolefin composition may comprise

- 25 wt% bimodal polyethylene and 75 wt% polyethylene recyclate;
- 30 wt% bimodal polyethylene and 70 wt% polyethylene recyclate;
- 35 wt% bimodal polyethylene and 65 wt% polyethylene recyclate;
- 40 wt% bimodal polyethylene and 60 wt% polyethylene recyclate;
- 45 wt% bimodal polyethylene and 55 wt% polyethylene recyclate;
- 50 wt% bimodal polyethylene and 50 wt% polyethylene recyclate;

- 55 wt% bimodal polyethylene and 45 wt% polyethylene recyclate;
- 60 wt% bimodal polyethylene and 40 wt% polyethylene recyclate;
- 65 wt% bimodal polyethylene and 35 wt% polyethylene recyclate;
- 70 wt% bimodal polyethylene and 30 wt% polyethylene recyclate;
- 75 wt% bimodal polyethylene and 25 wt% polyethylene recyclate.

In a preferred embodiment the present polyolefin composition has a $\Delta K_I$ as an indicator for fatigue crack growth resistance (derived from CRB testing according to ISO 18489:2015) of more than 0.55, preferably of more than 0.60, more preferably of more than 0.70, even more preferably of more than 0.75 MPa*m$^{0.5}$ at da/dN of 1E-5 mm/cycle.

The $\Delta K_I$ value of the present polyolefin composition may vary depending on the amount of polyethylene recyclate added to the composition.

For example, if 23 - 27 wt%, preferably 25 wt% of polyethylene recyclate are added the $\Delta K_I$ value of the final polyolefin composition may be more than 0.70, more preferably more than 0.75 MPa*m$^{0.5}$ at da/dN of 1E-5 mm/cycle.

If 48 - 52 wt%, preferably 50 wt% of polyethylene recyclate are added the $\Delta K_I$ value of the final polyolefin composition may be more than 0.65, more preferably more than 0.70 MPa*m$^{0.5}$ at da/dN of 1E-5 mm/cycle.

If 72 - 77 wt%, preferably 75 wt% of polyethylene recyclate are added the $\Delta K_I$ value of the final polyolefin composition may be more than 0.60, more preferably more than 0.64 MPa*m$^{0.5}$ at da/dN of 1E-5 mm/cycle.

The polyolefin composition has a melt flow rate MFR$_5$ (5 kg, 190 °C, measured according to ISO 1133) in the range between 0.3 and 1.2 g/10 min, preferably between 0.3 and 0.7 g/10min, more preferably between 0.4 and 0.6 g/10min.

In another embodiment the present polyolefin composition has an impact strength (ISO179-1, Charpy 1eA +23°C) of at least 10.0 kJ/m$^2$, preferably of at least 15 kJ/m$^2$, more preferably at least 18 kJ/m$^2$, still more preferably of at least 20 kJ/m$^2$, in particular in a range between 10 and 35 kJ/m$^2$, more particular in a range between 12 and 32 kJ/m$^2$, even more particular in a range between 15 and 31 kJ/m$^2$.

In case of a polyolefin composition comprising 25 wt% polyethylene recyclate the impact strength is in a range between 10 and 20 kJ/m$^2$, more particular in a range between 13 and 18 kJ/m$^2$, even more particular in a range between 15 and 17 kJ/m$^2$.

In case of a polyolefin composition comprising 50 wt% polyethylene recyclate the impact strength is in a range between 15 and 25 kJ/m$^2$, more particular in a range between 18 and 22 kJ/m$^2$.

In case of a polyolefin composition comprising 75 wt% polyethylene recyclate the impact strength is in a range between 20 and 35 kJ/m$^2$, more particular in a range between 23 and 30 kJ/m$^2$, even more particular in a range between 25 and 28 kJ/m$^2$.

In another embodiment, the present polyolefin composition has a density of 0.92 - 0.98 g/cm$^3$, preferably of 0.95 - 0.96 g/cm$^3$.

In an embodiment, the present polyolefin composition has a PE enthalpy of 170 - 200 J/g, preferably of 178-197 J/g, a PP enthalpy of 1,5 - 3,5 J/g, PE $T_M$ of 130 - 131 °C and a PP $T_M$ of 150 - 161 °C.

In another embodiment, the present polyolefin composition has a Youngs module of 800-900 MPa, preferably of 810-860 MPa; a Yield strength of 20-30 MPa, preferably of 23-26 MPa and a strain-at-break of 25-50 %, preferably of 30-40%.

Polyethylene Virgin Polymers

Bimodal polyethylene is used in the present polyolefin composition. The properties and features of the virgin bimodal polyethylene that may be used in the present polyolefin composition are described in the following.

The term "bimodal" means herein that the polymer consists of two polyethylene fractions, which have been produced under different polymerization conditions resulting in different (weight average) molecular weights and molecular weight distributions for the fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions.

The bimodal polyethylene comprises a polyethylene homopolymer and a polyethylene copolymer.

By ethylene homopolymer is meant a polymer which is formed of essentially only ethylene monomer units, i.e. of 99.9 wt% ethylene or more. It will be appreciated that minor traces of other monomers may be present due to industrial ethylene containing trace amounts of other monomers.

The polyethylene copolymer is formed from ethylene with at least one other comonomer having more than 6 carbon atoms, e.g. C6-20 olefin. Preferred comonomers are alpha-olefins, especially with 6-8 carbon atoms. Preferably, the comonomer is selected from the group consisting of 1-hexene, 4-methyl-1-pentene, 1-octene, 1,7-octadiene and 7-methyl-1,6-octadiene. The use of 1-hexene is most preferred.

Processes for obtaining such polymers are well known to a person skilled in the art and described for example in WO 2015/121161 A1.

Bimodal Polyethylene (BPE-1):

The at least one bimodal polyethylene (BPE-1) comprises a polyethylene homopolymer and a polyethylene copolymer. The copolymer is based on ethylene and 1-hexene as comonomer. Preferably the content of 1-hexene in the polymer is in the range from 0.1 to 4 wt% based on the total weight of the polymer, preferably 0.5 to 3 wt% and more preferably 1.5 to 2.5 wt%, such as 2 wt%.

It has a melt flow rate $MFR_5$ (190 °C, 5 kg, measured according to ISO 1133) in the range of 0.1 to 1 g/10 min, preferably of 0.15 to 0.5 g/10 min, more preferably of 0.2 to 0.3 g/10 min.

The resistance to slow crack growth SCG in notched pipe test (9.2 bar, 80 °C) is more than 2.000 h, most preferably of more than 5.000 h.

The density is about 930 - 970 $kg/m^3$, preferably 940 - 960 $kg/cm^3$. It may contain carbon black in an amount of 2 - 2.5 wt%.

With carbon black, its density is about 932 - 982 $kg/m^3$, preferably 952 - 972 $kg/m^3$. The Tensile modulus (1mm/min) is 800 - 1300 MPa, preferably 840- 1200 MPa, more preferably 880 - 1100 MPa, like for example 900-920 $kg/cm^3$.

This bimodal polyethylene has a $\Delta K_I$ (derived from CRB testing according to ISO 18489:2015) of more than 0.82, preferably of more than 0.85, even more preferably of more than 0.87 $MPa*m^{0.5}$ at da/dN of 1E-5 mm/cycle.

Bimodal Polyethylene (BPE-2): Comparative example

The at least one bimodal polyethylene (BPE-2) comprises a polyethylene homopolymer and a polyethylene copolymer. The copolymer is based on ethylene and 1-butene as comonomer.

It has a melt flow rate $MFR_5$ (190°C, 5 kg, measured according to ISO 1133) in the range of 0.1 to 1 g/10 min, preferably of 0.15 to 0.5 g/10 min, more preferably of 0.2 to 0.3 g/10 min.

The resistance to slow crack growth SCG in notched pipe test (9.2 bar, 80 °C) is more than 500 h, preferably more than 750 h, more preferably more than 1.000 h.

The density is about 940 - 970 $kg/m^3$, preferably 950 - 965 $kg/m^3$. It may contain carbon black in an amount of 2- 2.5 wt%.

With carbon black, its density is about 932 - 982 $kg/m^3$, preferably 952 - 972 $kg/m^3$. The Tensile modulus (1mm/min) is 800 - 1300, preferably 840 - 1200 MPa, more preferably 880 - 1100 MPa.

This bimodal polyethylene has a $\Delta K_I$ (derived from CRB testing according to ISO 18489:2015) of 0.82 $MPa*m^{0.5}$ at da/dN of 1E-5 mm/cycle.

Blend of recycled material

The present polyolefin composition may comprise 20-80 wt% (based on the total weight of the polyolefin composition) of a polyethylene enriched blend of recycled plastic material comprising polyethylene and polypropylene, which is recovered from a waste plastic material derived from post-consumer and/or post-industrial waste, with a melt flow rate $MFR_5$ ( 190 °C, 5 kg, measured according to ISO 1133) of at least 0.8 g/10 min.

The blend is obtained from a recycled waste stream. The blend can be either recycled post-consumer waste or post-industrial waste, such as for example from the automobile industry, or alternatively, a combination of both. It is particularly preferred that blend consists of recycled post-consumer waste and/or post-industrial waste.

Preferably, the polyethylene rich recycled material is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc.. None exhaustive examples of polyethylene rich recycled materials include: PURPOLEN PE (Mtm Plastics GmbH), food grade rHDPE (BIFFA PLC) and a range of polyethylene rich materials, such as e.g. HD-LM02041 from PLASgran Ltd. It is considered that the present invention could be applicable to a broad range of recycled polyethylene-rich materials or materials or compositions having a high content of recycled polyethylene. The polyethylene-rich recycled material may be in the form of granules. It may be obtained from domestic waste streams (i.e. it is a product of domestic recycling) for example the "yellow bag" recycling system, which operates in some parts of Germany.

According to the invention, the polyethylene enriched blend of recycled plastic material comprises polyethylene and polypropylene with a melt enthalpy ratio of PP : PE in the range of 0:100 to 10:90. In an embodiment the polyethylene enriched blend of recycled plastic material comprises polyethylene and polypropylene with a melt enthalpy ratio of PP : PE in the range of 0:100 to 5:95, preferably in the range of 0:100 to 3:97, more preferably in the range of 0:100 to 2.2:97.8.

The polyethylene fraction of the recycled material can comprise recycled high-density polyethylene (rHDPE), recycled medium-density polyethylene (rMDPE), recycled low-density polyethylene (rLDPE), recycled linear low density polyethylene (rLLDPE) and the mixtures thereof. In a certain embodiment, the recycled material is high density PE with an average density of greater than 0.940 g/cm$^3$, preferably greater than 0.945 g/cm$^3$, most preferably greater than 0.950 g/cm$^3$.

In another embodiment the polyethylene enriched blend of recycled plastic material comprises further components selected from the group comprising polystyrene, stabilizers, polyamide, talc, chalk, paper, wood, metal, limonene, fatty acid and mixtures thereof.

Due to the recycling origin, the blend may contain: organic fillers, and/or inorganic fillers, and/or additives in amounts of up to 10 wt%, preferably up to 3 wt% with respect to the weight of the blend.

As stated above, the recyclate blend may include one or more further components, selected from:

- up to 3.0 wt% stabilizers, preferably up to 2.0 wt% stabilizers,
- up to 4.0 wt% polyamide, preferably up to 2.0 wt% polyamide,
- up to 3.0 wt% talc, preferably up to 1.0 wt% talc,
- up to 3.0 wt% chalk, preferably up to1.0 wt% chalk,
- up to 1.0 wt% paper, preferably up to 0.5 wt% paper,
- up to 1.0 wt% wood, preferably up to 0.5 wt% wood, and
- up to 0.5 wt% metal, preferably up to 0.1 wt% metal,

based on the overall weight of blend (A).

According to one embodiment, the polyethylene enriched blend of recycled plastic material has a melt flow rate MFR (ISO 1133, 5 kg, 190°C) of 0.8 to 5 g/10min, preferably of 1 to 4 g/10min, more preferably of 1.5 to 3 g/10min.

In a further preferred embodiment of the present invention the Charpy Notched Impact Strength measured according to ISO 179-1eA at 23 °C of the recyclate blend is more than 15 kJ/m$^2$, preferably in the range from 15 to 30 kJ/m$^2$ and more preferably in the range from 20 to 25 kJ/m$^2$.

In another embodiment, the recyclate blend has a density of 0.92-0.98 g/cm$^3$, preferably of 95-0.96 g/cm$^3$.

In an embodiment, the recyclate blend has a PE enthalpy of 160-220 J /g, preferably of 170-210 J/g, more preferably of 176-201 J/g, a PP enthalpy of 3.7-3.9 J/g, PE $T_M$ of 131-132°C and a PP $T_M$ of 155-162°C.

In another embodiment, the recyclate blend has a Youngs module of 750-900 MPa, preferably of 800-850 MPa; a Yield strength of 20-30 MPa, preferably of 20-25 MPa and a strain-at-break of 30-115 %, preferably of 40-50%.

Stabilizer

In a preferred embodiment, the present polyolefin composition comprises at least one stabilizer, in particular at least one anti-oxidant agent.

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'-bis(1,1'-dimethylbenzyl)diphenylamine), or antioxidant blends. Preferred antioxidants may be Tris (2,4-di-*t*-butylphenyl) phosphite and/or Octadecyl 3-(3',5'-di-tert. butyl-4-hydroxyphenyl)propionate.

The at least one stabilizer may be present in the polyolefin composition in an amount of 0.05-0.5 wt%, preferably 0.08-0.4 wt %, more preferably by at least 0.1-0.3 wt%, such as 0.15 wt% (based on the overall weight of the polymer composition).

Further Additives

In a further embodiment, the polyolefin composition may comprise further additives. Examples of additives for use in the composition are pigments or dyes (for example carbon black), anti-acids and/or anti-UVs, antistatic agents, nucleating agents and utilization agents (such as processing aid agents). Preferred additives are carbon black, at least one antioxidant and/or at least one UV stabilizer.

Generally, the amount of these additives is in the range of 0 to 5.0 wt%, preferably in the range of 0.01 to 3.0 wt%, more preferably from 0.01 to 2.0 wt% based on the weight of the total composition.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1).

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-octoxy-benzophenone (CAS-No. 1843-05-6, Chimassorb 81). Preferred UV stabilizers may be low and/or high molecular weight UV stabilizers such as *n*-Hexadecyl- 3,5-di-*t*-butyl-4-hydroxybenzoate, A mixture of esters of 2,2,6,6-tetramethyl-4-piperidinol and higher fatty acids (mainly stearic acid) and/or Poly((6-morpholino-s-triazine-2,4-diyl)(1,2,2,6,6-pentamethyl-4-piperidyl)imino)hexameth-ylene (1,2,2,6,6-pentamethyl-4-piperidyl)imino)).

It is appreciated that the present invention also refers to a process for producing the polyolefin compositions as defined herein. The process comprises the steps of

- providing a mixture of 20-80 wt% (based on the total weight of the polyolefin composition) of the at least one bimodal polyethylene comprising a polyethylene homopolymer and a polyethylene copolymer a), and 80-20 wt% (based on the total weight of the polyolefin composition) of the polyethylene enriched blend of recycled plastic material b), and optionally further additives ;
- melting the mixture in an extruder, and
- optionally pelletizing the obtained polyolefin composition.

For the purposes of the present invention, any suitable melting and mixing means known in the art may be used for carrying out the mixing and melting.

However, the melting and mixing step preferably takes place in a mixer and/or blender, high or low shear mixer, high-speed blender, or a twin-screw extruder. Most preferably, the melting and mixing step takes place in a twin-screw extruder such as a co-rotating twin-screw extruder. Such twin-screw extruders are well known in the art and the skilled person will adapt the melting and mixing conditions (such as melting temperature, screw speed and the like) according to the process equipment.

The polyolefin composition according to the invention can be used for a wide range of applications, for example in the manufacture of structural products, appliances, pipes, roofing applications, in particular for pipes.

The invention is now explained in more detail with reference to the examples. It shows

Figure 1     a diagram illustrating the crack growth rate [mm/cycle] v.s. $\Delta K_I$ [MPa*m$^{0.5}$] of comparative examples and inventive examples; and

Figure 2     a diagram illustrating $\Delta K_I$ [MPa*m$^{0.5}$] at the crack growth rate of 1E-5 mm/cycle over melt flow rate [g/10 min] of comparative examples and inventive examples.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**Test Methods**

The following definitions of terms and determination methods apply for the above general description of the invention as well as to the below examples unless otherwise defined.

**Production of multipurpose specimens (MPS) and Charpy Type 1 specimen**

All MPS were produced via injection molding according to the conditions described in ISO 3167 (Plastics - Multipurpose test specimens) and ISO 17855-2 (Plastics - Polyethylene (PE) moulding and extrusion materials - Part 2: Preparation of test specimens and determination of properties) on an Engel Victory 60 (Engel, Austria). Specimens were conditioned at 23°C and 50 % relative humidity for at least three days. After conditioning, these specimens were used for tensile testing and for subsequent cutting and notching to Type 1 specimens for Charpy notched impact testing according to ISO 179-1 (see more information about the test later).

**Production of Cracked round bar (CRB) specimen**

CRB specimens were produced according to ISO 18489. Therefore, plates in the size of 16 mm x 120 mm x 150 mm were pressed in a positive mold at 180°C. More specifically, a hydraulic press of the Langzauner Perfect line (Langzauner, Austria) was used. Within the fully automated program, 280 g granules are heated within the mold to 180°C with the weight of the mold and cylinder on top of them. An integrated temperature sensor allows for direct measurement of the granules or melt, respectively. When the temperature of 180°C is reached, it is held isothermal for 15 minutes. After that, the slow cooling with a cooling rate of 2 K/min is started. Depending on the viscosity of the specimen, the full pressure of 10 MPa is applied to the granules at temperatures from 135°C to 155°C. After reaching 40°C, the pressure is released, the mold is opened, and the plate can be removed.

The produced plates were conditioned at 23 °C and 50 % relative humidity for at least three days before being cut into bars on a table saw and lathed on a turning lathe to CRB specimens according to ISO 18389. A 0.4 mm thick industrial grade razor blade was used to notch the specimen. The specimens were conditioned at 23°C and 50 % relative humidity for another day after being notched before being tested.

**Melt flow rate (MFR)**

The MFR measurements were conducted at 190°C and with 5 kg on a Zwick/Roell Mflow melt flow indexer (Zwick Roell, Germany) according to ISO 1133-1 (Plastics - Determination of the melt mass-flow rate (MFR) and melt volume-flow rate (MVR) of thermoplastics - Part 1: Standard method). Cuts were made every 3 mm piston movement. The time between cuts was measured and each extrudate was weighted on an ABS 220-4 electronic balance (Kern & Sohn, Germany). The extrapolation to 10 minutes calculated the MFR in g/10 min for each cut. For each material, one measurement was conducted. Within one measurement, 6 cuts were made and used for the calculation of average values and standard deviations.

**Density**

The density measurements were conducted according to ISO 1183-1 (Plastics - Methods for determining the density of non-cellular plastics - Part 1: Immersion method, liquid pycnometer method and titration method) with a Sartorius CPA 225D lab balance (Sartorius, German). Samples were cut from the sprue-sided shoulders of multi-purpose specimens (MPS). In the first step, the respective sample was weighed dry, measuring its mass in air ($m_{S,A}$). In the second step, the sample was immersed in deionized water and put below a buoyancy cage which was connected to the scale, enabling the measurement of the sample buoyancy ($m_{S,IL}$) without the need of a sinker. A wire was used to free the sample of air bubbles and the temperature of the immersion liquid was recorded for the calculation of its density ($\rho_{IL}$). The sample density was calculated according to following formula with measurement apparatus correction variables A and B:

$$\rho_s = \frac{m_{S.A} * \rho_{IL}}{A * (m_{S.A} - m_{S.IL})} + B$$

For each material, five samples, each cut from an individual MPS, were used for the calculation of average values and standard deviations.

**Melt enthalpy by Differential scanning calorimetry (DSC)**

DSC tests were carried out on a Perkin Elmer differential scanning calorimeter DSC 8500 (PerkinElmer, USA). Samples were cut from shoulders of injection molded multi-purpose specimens and encapsuled in perforated aluminum pans. The average sample weight was around 8 mg. The procedure consisted of a first heating, subsequent cooling, and a second heating phase, each in the temperature range of 0 °C to 200 °C with a constant heating/cooling rate of 10 K/min with nitrogen as purge gas and a flow rate of 20 ml/min. The DSC measurements were accomplished to determine the melting peak in the second heat-up phase which is characteristic for the semi-crystallinity achieved under controlled cooling in the DSC device. To determine the melting enthalpy, the area of the melting peak was integrated. Due to the normalization of the heat flux by the specimen mass the thermogram can be shown as normalized heat flux (W/g) over time (s) and the area of the peak (W/g * s) will calculate to W*s/g or J/g normalized melting enthalpy. For each material, five samples, each cut from an individual MPS, were used for the calculation of average values and standard deviations. Measurements were made according to ISO 11357-1 (Plastics - Differential scanning calorimetry (DSC) - Part 1: General principles) and ISO 11357-3 (Part 3: Determination of temperature and enthalpy of melting and crystallization). In short, the area of the melting peak in the second heating run was integrated.

**Tensile properties**

The mechanical properties (Young's modulus, yield strength and strain at break) were examined with an universal testing machine Zwick AllroundLine Z020 (Zwick Roell, Germany) equipped with a multi-extensometer at 23 °C. Test parameters and MPS were used according to ISO 527-1 (Plastics - Determination of tensile properties - Part 1: General principles) and ISO 527-2 (Part 2: Test conditions for moulding and extrusion plastics) with a traverse speed of 1 mm/min for Young's modulus determination until a strain of 0.25 % and after that 50 mm/min until failure. For each material five MPS were tested for the calculation of average values and standard deviations.

**Charpy notched impact strength**

Impact tests were conducted according to ISO 179-1 (Plastics - Determination of Charpy impact properties - Part 1: Non-instrumented impact test) on a Zwick/Roell HIT25P pendulum impact tester (Zwick Roell, Germany) with injection molded specimens (see information below). After pretests to determine the suitable pendulum size, a 2 Joule pendulum was chosen for all tests. Notches were produced with a Leica RM2265 microtome (Leica, Germany) and measured on an Olympus SZX16 stereomicroscope (Olympus, Japan). Test conditions were 23 °C with edgewise notched specimens with 0.25 mm notch-radius (1eA). For each material ten specimens were tested for the calculation of average values and standard deviations.

**Cracked round bar (CRB) method**

For investigation of the resistance to fatigue crack growth (FCG) following ISO 18489:2015 (Polyethylene (PE) materials for piping systems - Determination of resistance to slow crack growth under cyclic loading - Cracked Round Bar test method), all materials were tested with an electro-dynamic testing machine of the type ElectroPuls E10000 (Instron, USA). To produce CRB specimens, plates were sheet molded and subsequently cut, lathed, and notched according to ISO 18489. Sinusoidal loading profiles with a frequency of 10 Hz, an R-ratio of 0.1 and individually adjusted initial stress intensity factor ranges ($\Delta K_{ini}$) were used to achieve testing times between 10 hours and 100 hours. An in-situ optical measurement of the crack length over the whole circumference of the specimen was utilized for investigations of the crack growth. Characteristic double logarithmic FCG kinetic curves were plotted providing the relation between the FCG rate, da/dN, and the stress intensity factor range, $\Delta K_I$, describing the local crack tip stress field. Per material at least one specimen was tested. See also Fischer et al., Polymer testing 78 (2029) 105998 or Fischer et al, Engineering Fracture Mechanics 203 (2018) 44-53.

**Resistance to slow crack growth SCG in notched pipe test**

Resistance to slow crack growth SCG in notched pipe test was determined according to EN ISO 13479 on pipes of 110x10 mm (SDR11) and length of 640 to 650 mm.

Different blends of recycled material were used. The blends are characterized by the following properties:

Blend A1:
MFR$_5$ 2.4 - 2.5 g/ 10 min, density 0.95 g/cm$^3$; PE enthalpy 176.6 J/g, PP enthalpy 3.97 J/g, Melt enthalpy ratio (PP:PE) of 2.2:97.8, PE Tm 132,48°C, PP Tm°C 162.49°C, Youngs modulus 759 MPa, yield strength 21.5 MPa, strain at break 112.9 %; impact strength (notched charpy test 23 °C) 18-19 KJ/m$^2$.
Blend A2:
MFR$_5$ 0.8 - 0.83 g/ 10 min, density 0.95 g/cm3; PE enthalpy 201.42 J/g, Melt enthalpy ratio (PP:PE) of 0:100, PE Tm 131.32 °C, Youngs modulus 899.8 MPa, yield strength 25.6 MPa, strain at break 35.4 %; impact strength (notched charpy test 23 °C) 26-27 KJ/m$^2$.

Virgin Polymers used are Bimodal Polyethylene BPE-1 (Inventive Example) and Bimodal Polyethylene BPE-2 (comparative Example).

The bimodal polyethylene (BPE-1) comprises a polyethylene homopolymer and a polyethylene copolymer based on ethylene and 1-hexene as comonomer (1-hexene content = 2 wt% in BPE-1). BPE-1 was produced as described according to the "Example" described on pages 15 to 17 in WO2008/131817A1.

The bimodal polyethylene (BPE-2) used as comparative example comprises a polyethylene homopolymer and a polyethylene copolymer based on ethylene and 1-butene as comonomer (1-butent content = 1.2 wt% in BPE-2). BPE-2 was produced as described according to the "Comparative example" described on pages 12 to 13 in WO2008131817A1.

In following Table 1 several examples (comparative-CE; inventive-IE) are summarized. Table 1 shows the resistance to fatigue crack growth of polyolefin compositions according to the invention with different amounts of recyclate blends A1 / A2 (75 wt%, 50 wt%, 25 wt%) and bimodal polyethylene BPE-1 as inventive examples, and bimodal polyethylene BPE-2, 100% recylate (Blend A1/A2) or 100% virgin (bimodal polyethylene) as comparative examples. Please note that the numbering of inventive examples and comparative examples in Table 1 correspond to the numbering in Table 3 provided further below.

Table 1

| | $\Delta K_I$ at da/dN of 1E-5 mm/cycle [MPa*m$^{0,5}$] | | | | |
|---|---|---|---|---|---|
| | **75% Blend** | **50 % Blend** | **25% Blend** | **100% Virgin** | **100% Recyclate** |
| Blend A1 + BPE-1 (IE 1-3) | n.m. | 0.6 | 0.76 | | |
| Blend A2 + BPE-1 (IE 4-6) | 0.64 | 0.7 | 0.77 | | |
| Blend A2 + BPE-2(CE 4-6 | 0.64 | 0.68 | 0.7 | | |
| Blend A1 (CE 1) | | | | | n.m. |
| Blend A2 (CE 2) | | | | | 0.62 |
| BPE-1 (CE 3) | | | | 0.89 | |
| BPE-2 (CE-7) | | | | 0.82 | |
| n.m.: not measurable | | | | | |

Resistance to FCG

As can be seen from Table 1 the resistance to fatigue crack growth of polyolefin compositions according to the invention comprising the virgin bimodal polyethylene and the polyethylene recyclate varies with recyclate load; the lower the recyclate load the higher the resistance to fatigue crack growth.

As further can be seen the resistance to fatigue crack growth (FCG) also depends on the virgin bimodal polyethylene used. For example, the composition Blend 2 + BPE-1 with a 25 wt% recyclate loading has an increased $\Delta K_I$ at da/dN of 1E-5 mm/cycle by 9.3 % over the Blend2 + BPE-2 with a 25 wt% recyclate loading.

The difference of $\Delta K_I$ at da/dN of 1E-5 mm/cycle between BPE-1 and BPE-2 based compounds diminishes as the loading of recyclate goes up. However, at 25 wt% recyclate loading, the difference between BPE-1 and BPE-2 based compositions (25 wt% recyclate loading) is at least on the same level as that between BPE-1 and BPE-2 (0 wt% loading of recyclate), if not better (see Table 2). This is a non-linear change. Thus, an optimal loading of recyclate shall be lower than 50 wt% to maximize the advantage of BPE-1 in comparison to BPE-2.

Table 2

| Loading of Blend A2, wt% | Difference of $\Delta K_I$ at da/dN of 1E-5 mm/cycle (BPE-1 vs BPE-2), % |
|---|---|
| 75 | 0 |
| 50 | 2.4 |
| 25 | 9.3 |
| 0 | 8.5 |

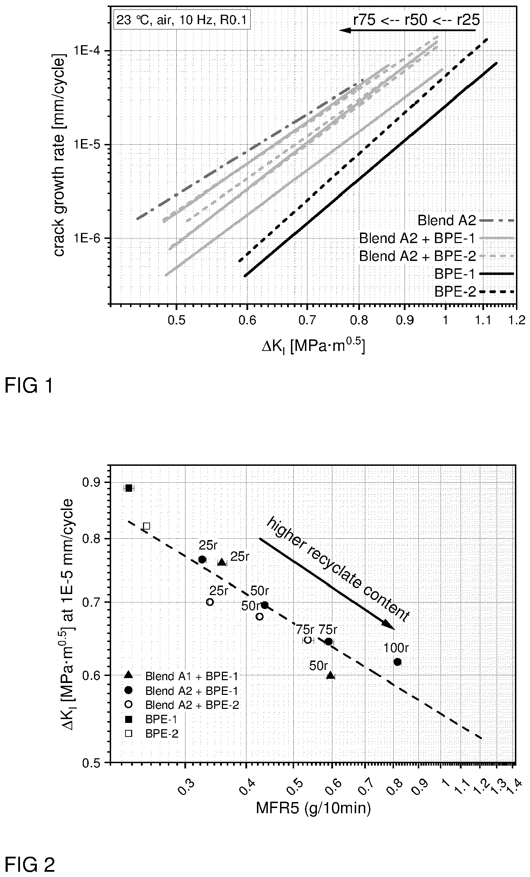

Figure 1 illustrates the performance of the polyolefin compositions according to the invention. As can be seen, the polyolefin compositions comprising BPE-2 and different recyclate loadings fall short to the performance of the polyolefin compositions comprising BPE-1 and different recyclate loadings, especially for 25 wt% recyclate loading.

The diagram of Figure 2 illustrates the resistance to fatigue crack growth $\Delta K_I$ [MPa*m$^{0.5}$] at crack growth rate of 1E-5 mm/cycle over melt flow rate [g/10 min] of the different compositions. When comparing the resistance to fatigue crack growth to melt flow rate MFR, a clear offset can be seen between BPE-1 and BPE-2 compounds with the same recyclate load. This is in particular the case for the polyolefin compositions of BPE-1 and BPE-2 with a 25 wt% recyclate loading.

The diagram of Figure 2 indicates that MFR has great influence on resistance to fatigue crack growth: the lower the MFR the better resistance to fatigue crack growth. At a similar MFR, BPE-1 based compositions are better than those compositions based on BPE-2. Note that for 75 wt% loading of recyclate, BPE-1 based composition has similar resistance to fatigue crack growth as the BPE-2 based composition but the $MFR_5$ of the BPE-1 base composition is higher.

Table 3 summarizes other properties of the polyolefin composition according to the invention, such as melt flow rate, modulus, DSC results, and charpy notched impact strength.

The calculation of the PP : PE melt enthalpy ratio is done as follows:

$$PP \text{ melt enthalpy fraction} = PP \text{ enthalpy} / (PE \text{ enthalpy} + PP \text{ enthalpy})$$

$$PE \text{ melt enthalpy fraction} = PE \text{ enthalpy} / (PE \text{ enthalpy} + PP \text{ enthalpy})$$

$$PP:PE \text{ melt enthalpy ratio} = PP \text{ melt enthalpy fraction} / PE \text{ melt enthalpy fraction}.$$

Table 3

| | | MFRs [g/10 min] | density [g/cm³] | PE enthalpy [J/g] | PP enthalpy [J/g] | PE Tm [°C] | PP Tm [°C] | PE enthalpy fraction | Melt enthalpy ratio (PP:PE) | Young's modulus [MPa] | yield strength [MPa] | strain-at-break [%] | Charpy notched impact strength [kJ/m²] |
|---|---|---|---|---|---|---|---|---|---|---|---|---|---|
| CE 1 | Blend A1 | 2.48 | 0.95 | 176.63 | 3.97 | 132.477 | 162.49 | 0.98 | 2.2:97.8 | 759 | 21.5 | 112.9 | 18.5 |
| IE 1 | BPE-1 + 75% Blend A1 | 1.07 | 0.95 | 178.92 | 3.67 | 130.76 | 160.997 | 0.98 | 2.0:98.0 | 812.6 | 23.0 | 48.8 | 25.0 |
| IE 2 | BPE-1 + 50% Blend A1 | 0.60 | 0.95 | 180.59 | 2.00 | 130.513 | 161,667 | 0.99 | 1.1:98.9 | 815.8 | 23.7 | 36.6 | 21.7 |
| IE 3 | BPE-1 + 25% Blend A1 | 0.36 | 0.96 | 184.17 | 1,16 | 130.04 | 158,607 | 0.99 | 0.6:99.4 | 852 | 24.8 | 27.1 | 15.9 |
| CE2 | Blend A2 | 0.82 | 0.95 | 201.42 | 0 | 131.32 | | 1 | 0:100 | 899.8 | 25.6 | 35.4 | 26.8 |
| IE 4 | BPE-1 + 75% Blend A2 | 0.59 | 0.95 | 196.59 | 0 | 131.04 | | 1 | 0:100 | 863 | 24.9 | 33.7 | 30.2 |
| IE 5 | BPE-1 + 50% Blend A2 | 0.44 | 0.95 | 197.29 | 0 | 131.12 | | 1 | 0:100 | 868.6 | 25.3 | 28.5 | 18.1 |
| IE 6 | BPE-1 + 25% Blend A2 | 0.33 | 0.95 | 187.78 | 0 | 130.54 | | 1 | 0:100 | 886.2 | 25.7 | 24.0 | 16.5 |
| CE3 | BPE-1 | 0.23 | 0.96 | 181.69 | 0 | 129.39 | | 1 | 0:100 | 910.8 | 25.7 | 21.9 | 17.3 |

| | | MFRs [g/10 min] | density [g/cm$^3$] | PE enthalpy [J/g] | PP enthalpy [J/g] | PE Tm [°C] | PP Tm [°C] | PE enthalpy fraction | Melt enthalpy ratio (PP: PE) | Young's modulus [MPa] | yield strength [MPa] | strain-at-break [%] | Charpy notched impact strength [kJ/m$^2$] |
|---|---|---|---|---|---|---|---|---|---|---|---|---|---|
| CE4 | BPE-2 + 75% Blend A2 | 0.53 | 0.95 | 201.9 | | 130.9 | | | | 913 | 25.7 | 26.3 | 30.4 |
| CE5 | BPE-2 + 50 % Blend A2 | 0.43 | 0.95 | 182.3 | | 130.6 | | | | 920 | 26.8 | 18,9 | 29.5 |
| CE 6 | BPE-2 + 25 % Blend A2 | 0.34 | 0.95 | 189.2 | | 130.3 | | | | 939 | 28.4 | 13.5 | 24.6 |
| CE 7 | BPE-2 | 0.24 | 0.96 | 183.2 | | 129.3 | | | | 1020 | 30.1 | 8.6 | 17.2 |

EP 4 141 066 B1

**Claims**

1. Polyolefin composition comprising

    a) 20-80 wt% (based on the total weight of the polyolefin composition) of at least one bimodal polyethylene comprising a polyethylene homopolymer and a polyethylene copolymer formed from ethylene and at least one olefin with at least 6 carbon atoms as comonomer with a melt flow rate $MFR_5$ (190°C, 5 kg, measured according to ISO 1133) of at least 0.1 g/10 min

    b) 80-20 wt% (based on the total weight of the polyolefin composition) of a polyethylene enriched blend of recycled plastic material comprising polyethylene (PE) and polypropylene (PP) with a melt enthalpy ratio of PP : PE in the range of 0:100 to 10:90 (measured according to ISO 11357-1 and ISO 11357-3), which is recovered from a waste plastic material derived from post-consumer and/or post-industrial waste, with a melt flow rate $MFR_5$ (190 °C, 5 kg, measured according to ISO 1133) of at least 0.8 g/10 min; and

    optionally further additives, wherein the sum of all ingredients always adds up to 100 wt%.

2. Polyolefin composition according to claim 1, **characterized in that** it comprises

    a) 23-77 wt%, preferably 48-77 wt%, more preferably 63-77 wt% of the at least one bimodal polyethylene;
    b) 77-23 wt%, preferably 52-23 wt%, more preferably 37-23 wt% of the polyethylene enriched blend of recycled plastic material comprising polypropylene and polyethylene;

    and optionally further additives, wherein the sum of all ingredients always adds up to 100 wt%.

3. Polyolefin composition according to claim 1-2, **characterized in that** it comprises at least one stabilizer, in particular at least one anti-oxidant agent.

4. Polyolefin composition according to claim 3, **characterized by** 0.05-0.5 wt%, preferably 0.08-0.4 wt %, more preferably by at least 0.10-0.3 wt% (based on the overall weight of the polymer composition) of the at least one stabilizer.

5. Polyolefin composition according to any one of the preceding claims, **characterized by** a $\Delta K_I$ (derived from Cracked round bar testing according to ISO 18489:2015) of more than 0.55, preferably of more than 0.60, more preferably of more than 0.70, even more preferably of more than 0.75 $MPa*m^{0.5}$ at da/dN of $1E^{-5}$ mm/cycle.

6. Polyolefin composition according to any one of the preceding claims, **characterized by** a melt flow rate $MFR_5$ (5 kg, 190°C, measured according to ISO 1133) in the range between 0.3 and 1.2 g/10 min, preferably between 0.3 and 0.7 g/10min, more preferably between 0.3 and 0.6 g/10min.

7. Polyolefin composition according to any one of the preceding claims, **characterized by** an impact strength (ISO179-1, Charpy 1eA +23°C) of at least 10 $kJ/m^2$, preferably of at least 15 $kJ/m^2$, more preferably at least 18 $kJ/m^2$, still more preferably of at least 20 $kJ/m^2$, in particular in a range between 10 and 35 $kJ/m^2$, more particular in a range between 12 and 32 $kJ/m^2$, even more particular in a range between 15 and 31 $kJ/m^2$.

8. Polyolefin composition according to any one of the preceding claims, **characterized in that** the at least one bimodal polyethylene comprising a polyethylene homopolymer and a polyethylene copolymer is selected from a group comprising at least one bimodal polyethylene (BPE-1) having a melt flow rate $MFR_5$ (190°C, 5 kg, measured according to ISO 1133) in the range of 0.1 to 1 g/10 min, preferably of 0.15 to 0.5 g/10 min, more preferably of 0.2 to 0.3 g/10 min and a resistance to slow crack growth SCG in notched pipe test (9.2 bar, 80°C, according to EN ISO 13479) of more than 1.000 h, preferably of more than 2.000 h, most preferably of more than 5.000 h.

9. Polyolefin composition according to any one of the preceding claims **characterized in that** the at least one bimodal polyethylene comprising a polyethylene homopolymer and a polyethylene copolymer has a $\Delta K_I$ (derived from CRB testing according to ISO 18489:2015) of more than 0.82, preferably of more than 0.85, even more preferably of more than 0.87 $MPa*m^{0.5}$ at da/dN of 1E-5 mm/cycle.

10. Polyolefin composition according to any one of the preceding claims **characterized in that** the polyethylene enriched blend of recycled plastic material comprises polyethylene and polypropylene with a melt enthalpy ratio of PP : PE in the range of 0:100 to 5: 95, preferably in the range of 0:100 to 3:97, more preferably in the range of 0:100 to 2.2:97.8.

**11.** Polyolefin composition according to any one of the preceding claims, **characterized in that** the polyethylene enriched blend of recycled plastic material comprises further components selected form the group consisting of polystyrene, stabilizers, polyamide, talc, chalk, paper, wood, metal, limonene, fatty acid and mixtures thereof.

**12.** Polyolefin composition according to any one of the preceding claims, **characterized in that** the polyethylene enriched blend of recycled plastic material has a melt flow rate $MFR_5$ (ISO 1133, 5 kg, 190°C) of 0.8 to 5 g/10min, preferably of 1 to 4 g/10min, more preferably of 1.5 to 3 g/10min.

**13.** Use of a polyolefin composition according to any one of the preceding claims in the manufacture of structural products, in particular for pipes.

**14.** Process for producing the polyolefin composition according to any one of the preceding claims, wherein the process comprises the steps of

- providing a mixture of 20-80 wt% (based on the total weight of the polyolefin composition) of the at least one bimodal polyethylene comprising a polyethylene homopolymer and a polyethylene copolymer a), and 80-20 wt% (based on the total weight of the polyolefin composition) of the polyethylene enriched blend of recycled plastic material b), and optionally further additives
- melting the mixture in an extruder, and
- optionally pelletizing the obtained polyolefin composition.

**15.** An article comprising the polyolefin composition according to any one of the preceding claims 1 to 12, in particular pipe.

**Patentansprüche**

**1.** Polyolefinzusammensetzung enthaltend

a) 20-80 Gew.-% (bezogen auf das Gesamtgewicht der PolyolefinZusammensetzung) mindestens eines bimodalen Polyethylens, umfassend ein Polyethylen-Homopolymer und ein Polyethylen-Copolymer, das aus Ethylen und mindestens einem Olefin mit mindestens 6 Kohlenstoffatomen als Comonomer gebildet wird, mit einer Schmelzflussrate $MFR_5$ (190°C, 5 kg, gemessen nach ISO 1133) von mindestens 0,1 g/10 min
b) 80-20 Gew.-% (bezogen auf das Gesamtgewicht der PolyolefinZusammensetzung) eines mit Polyethylen angereicherten Blends aus recyceltem Kunststoffmaterial, das Polyethylen (PE) und Polypropylen (PP) mit einem Schmelzenthalpieverhältnis von PP : PE im Bereich von 0:100 bis 10:90 (gemessen nach ISO 11357-1 und ISO 11357-3), das aus einem Kunststoffabfallmaterial gewonnen wird, das aus post-consumer und/oder post-industriellem Abfall stammt, mit einer Schmelzflussrate $MFR_5$ (190°C, 5 kg, gemessen nach ISO 1133) von mindestens 0.8 g/10 min; und

gegebenenfalls weitere Zusatzstoffe, wobei die Summe aller Inhaltsstoffe stets 100 Gew.-% ergibt.

**2.** Polyolefinzusammensetzung nach Anspruch 1, **dadurch gekennzeichnet, dass** sie umfasst

a) 23-77 Gew.-%, vorzugsweise 48-77 Gew.-%, besonders bevorzugt 63-77 Gew.-% des mindestens einen bimodalen Polyethylens;
b) 77-23 Gew.-%, vorzugsweise 52-23 Gew.-%, besonders bevorzugter 37-23 Gew.-% der mit Polyethylen angereicherten Mischung aus recyceltem Kunststoffmaterial, das Polypropylen und Polyethylen umfasst;

und gegebenenfalls weitere Zusatzstoffe, wobei die Summe aller Inhaltsstoffe stets 100 Gew.-% ergibt.

**3.** Polyolefinzusammensetzung nach Anspruch 1-2, **dadurch gekennzeichnet, dass** sie mindestens einen Stabilisator, insbesondere mindestens ein Antioxidationsmittel, enthält.

**4.** Polyolefinzusammensetzung nach Anspruch 3, **gekennzeichnet durch** 0,05-0,5 Gew.- %, vorzugsweise 0,08-0,4 Gew.-%, besonders bevorzugt durch mindestens 0,10-0,3 Gew.-% (bezogen auf das Gesamtgewicht der Polymerzusammensetzung) des mindestens einen Stabilisators.

**5.** Polyolefinzusammensetzung nach einem der vorangehenden Ansprüche, **gekennzeichnet durch** einen $\Delta K_l$ (ab-

geleitet aus der Prüfung von gerissenen Rundstäben gemäß ISO 18489:2015) von mehr als 0,55, vorzugsweise von mehr als 0,60, besonders bevorzugt von mehr als 0,70, ganz besonders bevorzugt von mehr als 0,75 MPa*m$^{0.5}$ bei da/dN von 1E$^{-5}$ mm/Zyklus.

6. Polyolefinzusammensetzung nach einem der vorhergehenden Ansprüche, **gekennzeichnet durch** eine Schmelzflussrate MFR$_5$ (5 kg, 190°C, gemessen nach ISO 1133) im Bereich zwischen 0,3 und 1,2 g/10 min, vorzugsweise zwischen 0,3 und 0,7 g/10min, besonders bevorzugt zwischen 0,3 und 0,6 g/10min.

7. Polyolefinzusammensetzung nach einem der vorhergehenden Ansprüche, **gekennzeichnet durch** eine Schlagzähigkeit (ISO179-1, Charpy 1eA +23°C) von mindestens 10 kJ/m$^2$ , vorzugsweise von mindestens 15 kJ/m$^2$ , besonders bevorzugt von mindestens 18 kJ/m$^2$ , ganz besonders bevorzugt von mindestens 20 kJ/m$^2$ , insbesondere in einem Bereich zwischen 10 und 35 kJ/m$^2$ , insbesondere in einem Bereich zwischen 12 und 32 kJ/m$^2$ , besonders bevorzugt in einem Bereich zwischen 15 und 31 kJ/m$^2$.

8. Polyolefinzusammensetzung nach einem der vorhergehenden Ansprüche, **dadurch gekennzeichnet, dass** das mindestens eine bimodale Polyethylen, das ein Polyethylenhomopolymer und ein Polyethylencopolymer umfasst, aus einer Gruppe ausgewählt ist, die mindestens ein bimodales Polyethylen (BPE-1) mit einer Schmelzflussrate MFR$_5$ (190°C, 5 kg, gemessen nach ISO 1133) im Bereich von 0.1 bis 1 g/10 min, vorzugsweise von 0,15 bis 0,5 g/10 min, besonders bevorzugt von 0,2 bis 0,3 g/10 min und eine Beständigkeit gegen langsames Risswachstum SCG im Kerbschlagtest (9,2 bar, 80°C, gemäß EN ISO 13479) von mehr als 1.000 h, vorzugsweise von mehr als 2.000 h, besonders bevorzugt von mehr als 5.000 h.

9. Polyolefinzusammensetzung nach einem der vorhergehenden Ansprüche, **dadurch gekennzeichnet, dass** das mindestens eine bimodale Polyethylen, das ein Polyethylen-Homopolymer und ein Polyethylen-Copolymer umfasst, einen $\Delta K_l$ (abgeleitet aus CRB-Tests gemäß ISO 18489:2015) von mehr als 0,82, vorzugsweise von mehr als 0,85, besonders bevorzugt von mehr als 0,87 MPa*m$^{0.5}$ bei da/dN von 1E-5 mm/Zyklus aufweist.

10. Polyolefinzusammensetzung nach einem der vorhergehenden Ansprüche, **dadurch gekennzeichnet, dass** die mit Polyethylen angereicherte Mischung aus recyceltem Kunststoffmaterial Polyethylen und Polypropylen mit einem SchmelzenthalpieVerhältnis von PP : PE im Bereich von 0:100 bis 5: 95, vorzugsweise im Bereich von 0:100 bis 3:97, besonders bevorzugt im Bereich von 0:100 bis 2,2:97,8, umfasst.

11. Polyolefinzusammensetzung nach einem der vorhergehenden Ansprüche, **dadurch gekennzeichnet, dass** die mit Polyethylen angereicherte Mischung aus recyceltem Kunststoffmaterial weitere Komponenten enthält, die aus der Gruppe ausgewählt sind, die aus Polystyrol, Stabilisatoren, Polyamid, Talk, Kreide, Papier, Holz, Metall, Limonen, Fettsäure und Mischungen davon besteht.

12. Polyolefinzusammensetzung nach einem der vorhergehenden Ansprüche, **dadurch gekennzeichnet, dass** das mit Polyethylen angereicherte Blend aus recyceltem Kunststoffmaterial eine Schmelzflussrate MFR$_5$ (ISO 1133, 5 kg, 190°C) von 0,8 bis 5 g/10min, vorzugsweise von 1 bis 4 g/10min, besonders bevorzugt von 1,5 bis 3 g/10min aufweist.

13. Verwendung einer Polyolefinzusammensetzung nach einem der vorhergehenden Ansprüche zur Herstellung von Bauprodukten, insbesondere für Rohre.

14. Verfahren zur Herstellung der Polyolefinzusammensetzung nach einem der vorhergehenden Ansprüche, wobei das Verfahren die folgenden Schritte umfasst

   - Bereitstellen eines Gemischs aus 20-80 Gew.-% (bezogen auf das Gesamtgewicht der Polyolefinzusammensetzung) des mindestens einen bimodalen Polyethylens, das ein Polyethylen-Homopolymer und ein Polyethylen-Copolymer a) umfasst, und 80-20 Gew.-% (bezogen auf das Gesamtgewicht der PolyolefinZusammensetzung) des mit Polyethylen angereicherten Blends aus recyceltem Kunststoffmaterial b), sowie gegebenenfalls weiteren Additiven
   - Schmelzen der Mischung in einem Extruder, und
   - gegebenenfalls Granulierung der erhaltenen Polyolefinzusammensetzung.

15. Gegenstand, der die Polyolefinzusammensetzung nach einem der vorangehenden Ansprüche 1 bis 12 enthält, insbesondere ein Rohr.

**Revendications**

1. Composition de polyoléfine comprenant

   a) de 20 à 80% en poids (par rapport au poids total de la composition de polyoléfine) d'au moins un polyéthylène bimodal comprenant un homopolymère de polyéthylène et un copolymère de polyéthylène formé à partir de l'éthylène et d'au moins une oléfine à au moins 6 atomes de carbone en tant que comonomère présentant un indice de fluidité $MFR_5$ (190°C, 5 kg, mesuré selon la norme ISO 1133) d'au moins 0,1 g/10 min.
   b) 80 à 20% en poids (par rapport au poids total de la composition de polyoléfine) d'un mélange enrichi en polyéthylène de matière plastique recyclée comprenant du polyéthylène (PE) et du polypropylène (PP) avec un rapport d'enthalpie de fusion de PP : PE dans la plage de 0:100 à 10:90 (mesuré selon la norme ISO 11357-1 et ISO 11357-3), qui est récupéré à partir de déchets de matière plastique dérivée de déchets post-consommation et/ou post-industriels, présentant un indice de fluidité $MFR_5$ (190°C, 5 kg, mesuré selon la norme ISO 1133) d'au moins 0,8 g/10 min ; et

   éventuellement d'autres additifs, dans laquelle la somme de tous les ingrédients s'élève toujours à 100% en poids.

2. Composition de polyoléfine selon la revendication 1, **caractérisée en ce qu'**elle comprend

   a) 23 à 77% en poids, de préférence 48 à 77% en poids, plus préférablement 63 à 77% en poids de l'au moins un polyéthylène bimodal ;
   b) 77 à 23% en poids, de préférence 52 à 23% en poids, plus préférablement 37 à 23% en poids du mélange enrichi en polyéthylène de matière plastique recyclée comprenant du polypropylène et du polyéthylène ;

   et éventuellement d'autres additifs, dans laquelle la somme de tous les ingrédients s'élève toujours à 100% en poids.

3. Composition de polyoléfine selon la revendication 1 et 2, **caractérisée en ce qu'**elle comprend au moins un stabilisant, en particulier au moins un agent antioxydant.

4. Composition de polyoléfine selon la revendication 3, **caractérisée par** 0,05 à 0,5% en poids, de préférence 0,08 à 0,4% en poids, plus préférablement par au moins 0,10 à 0,3% en poids (par rapport au poids total de la composition de polymère) de l'au moins un stabilisant.

5. Composition de polyoléfine selon l'une quelconque des revendications précédentes, **caractérisée par** un $\Delta K_I$ (dérivé d'un essai de la barre ronde fissurée selon la norme ISO 18489:2015) supérieur à 0,55, de préférence supérieur à 0,60, plus préférablement supérieur à 0,70, de préférence encore supérieur à 0,75 MPa*m$^{0,5}$ à un da/dN de 1E$^{-5}$ mm/cycle.

6. Composition de polyoléfine selon l'une quelconque des revendications précédentes, **caractérisée par** un indice de fluidité $MFR_5$ (5 kg, 190°C, mesuré selon la norme ISO 1133) dans la plage comprise entre 0,3 et 1,2 g/10 min, de préférence entre 0,3 et 0,7 g/10 min, plus préférablement entre 0,3 et 0,6 g/10 min.

7. Composition de polyoléfine selon l'une quelconque des revendications précédentes, **caractérisée par** une résistance aux chocs (ISO179-1, Charpy 1eA +23°C) d'au moins 10 kJ/m$^2$, de préférence d'au moins 15 kJ/m$^2$, plus préférablement d'au moins 18 kJ/m$^2$, de préférence encore d'au moins 20 kJ/m$^2$, en particulier dans une plage comprise entre 10 et 35 kJ/m$^2$, plus particulièrement dans une plage comprise entre 12 et 32 kJ/m$^2$, encore plus particulièrement dans une plage comprise entre 15 et 31 kJ/m$^2$.

8. Composition de polyoléfine selon l'une quelconque des revendications précédentes, **caractérisée en ce que** l'au moins un polyéthylène bimodal comprenant un homopolymère de polyéthylène et un copolymère de polyéthylène est choisi dans un groupe comprenant au moins un polyéthylène bimodal (BPE-1) présentant un indice de fluidité $MFR_5$ (190°C, 5 kg, mesuré selon la norme ISO 1133) dans la plage de 0,1 à 1 g/10 min, de préférence de 0,15 à 0,5 g/10 min, plus préférablement de 0,2 à 0,3 g/10 min et une résistance à la propagation lente des fissures SCG dans un essai sur tuyau entaillé (9,2 bar, 80°C, selon la norme EN ISO 13479) supérieure à 1000 h, de préférence supérieure à 2000 h, idéalement supérieure à 5000 h.

9. Composition de polyoléfine selon l'une quelconque des revendications précédentes, **caractérisée en ce que** l'au moins un polyéthylène bimodal comprenant un homopolymère de polyéthylène et un copolymère de polyéthylène

présente un $\Delta K_I$ (dérivé d'un essai CRB selon la norme ISO 18489:2015) supérieur à 0,82, de préférence supérieur à 0,85, de préférence encore supérieur à 0,87 MPa*m$^{0,5}$ à un da/dN de 1E$^{-5}$ mm/cycle.

10. Composition de polyoléfine selon l'une quelconque des revendications précédentes, **caractérisée en ce que** le mélange enrichi en polyéthylène de matière plastique recyclée comprend du polyéthylène et du polypropylène avec un rapport d'enthalpie de fusion de PP : PE dans la plage de 0:100 à 5:95, de préférence dans la plage de 0:100 à 3:97, plus préférablement dans la plage de 0:100 à 2,2:97,8.

11. Composition de polyoléfine selon l'une quelconque des revendications précédentes, **caractérisée en ce que** le mélange enrichi en polyéthylène de matière plastique recyclée comprend d'autres composants choisis dans le groupe constitué par le polystyrène, des stabilisants, le polyamide, le talc, la craie, le papier, le bois, le métal, le limonène, l'acide gras et des mélanges de ceux-ci.

12. Composition de polyoléfine selon l'une quelconque des revendications précédentes, **caractérisée en ce que** le mélange enrichi en polyéthylène de matière plastique recyclée présente un indice de fluidité MFR$_5$ (ISO 1133, 5 kg, 190°C) de 0,8 à 5 g/10 min, de préférence de 1 à 4 g/10 min, plus préférablement de 1,5 à 3 g/10 min.

13. Utilisation d'une composition de polyoléfine selon l'une quelconque des revendications précédentes dans la fabrication de produits structuraux, en particulier pour des tuyaux.

14. Procédé de production de la composition de polyoléfine selon l'une quelconque des revendications précédentes, dans lequel le procédé comprend les étapes de

- fourniture d'un mélange de 20 à 80% en poids (par rapport au poids total de la composition de polyoléfine) de l'au moins un polyéthylène bimodal comprenant un homopolymère de polyéthylène et un copolymère de polyéthylène a), et 80 à 20% en poids (par rapport au poids total de la composition de polyoléfine) du mélange enrichi en polyéthylène de matière plastique recyclée b), et éventuellement d'autres additifs
- fusion du mélange dans une extrudeuse, et
- pelletisation éventuelle de la composition de polyoléfine obtenue.

15. Article comprenant la composition de polyoléfine selon l'une quelconque des revendications 1 à 12 précédentes, en particulier un tuyau.

FIG 1

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109796650
- WO 2017220657 A1
- WO 2015121161 A1
- WO 2008131817 A1

**Non-patent literature cited in the description**

- **JUAN et al.** *Journal of Cleaner Production,* 2020, vol. 276, 124081
- *CHEMICAL ABSTRACTS,* 6683-19-8
- *CHEMICAL ABSTRACTS,* 31570-04-4
- *CHEMICAL ABSTRACTS,* 693- 36-7
- *CHEMICAL ABSTRACTS,* 11097-59-9
- *CHEMICAL ABSTRACTS,* 1592-23-0
- *CHEMICAL ABSTRACTS,* 557-05-1
- *CHEMICAL ABSTRACTS,* 60676-86-0
- *CHEMICAL ABSTRACTS,* 7631-86-9
- *CHEMICAL ABSTRACTS,* 112926-00-8
- *CHEMICAL ABSTRACTS,* 1318-74-7
- *CHEMICAL ABSTRACTS,* 1344-00-9
- *CHEMICAL ABSTRACTS,* 92704-41-1
- *CHEMICAL ABSTRACTS,* 1327-36-2
- *CHEMICAL ABSTRACTS,* 1344-95-2
- *CHEMICAL ABSTRACTS,* 1344-01-0
- *CHEMICAL ABSTRACTS,* 52829-07-9
- *CHEMICAL ABSTRACTS,* 1843-05-6
- **FISCHER et al.** *Polymer testing,* 2029, vol. 78, 105998
- **FISCHER et al.** *Engineering Fracture Mechanics,* 2018, vol. 203, 44-53